# EUROPEAN PATENT APPLICATION

(11) **EP 4 572 514 A1**
(43) Date of publication of application: **18.06.2025**
(21) Application number: 24219967.7
(22) Date of filing: 13.12.2024
(51) Int. Cl.: H04W 74/0816, H04W 84/12, H04W 74/00, H04W 72/0446

(54) **METHODS, APPARATUSES, AND SYSTEMS FOR RESERVING CHANNEL ACCESS FOR WIRELESS COMMUNICATIONS**

(30) Priority: 13.12.2023 US 202318538347
(71) Applicant: Comcast Cable Communications, LLC, Philadelphia, PA 19103 (US)
(72) Inventor: MUTYALA, Trilok Kumar, Philadelphia, 19103 (US); PANDIRLA, Ravi Teja, Philadelphia, 19103 (US); PONNAM, Sairam, Philadelphia, 19103 (US)
(74) Representative: V.O.

(57) **Abstract**

Systems, methods, and apparatuses are described for reserving channel access for wireless communications. A first device of a wireless network may request, and be granted access to, a communication channel of the wireless network during a transmission opportunity window. The transmission opportunity window may be larger in time than what is necessary for completing communications between the first device and the second device. Upon completion of the communications, the first device may receive a request to access the communication channel while the transmission opportunity window is still ongoing. Other devices in the wireless network may refrain from requesting access to the communication channel until expiration of the transmission opportunity window, which may increase the likelihood the second device gains access to the communication channel.

## Description

### BACKGROUND

In a wireless communication network, such as a Wi-Fi local area network (LAN), communication devices may conduct a contention for channel access prior to transmitting data over the network. This contention process may be problematic in cases where the data transmitted is latency sensitive, such as in video gaming environments, augmented reality/virtual reality (AR/VR) environments, and the like. For example, in a gaming scenario, increasing the latency on uplink communications (e.g., due to a contention process) may delay processing of the uplink data upstream (e.g., via a gaming server). However, downlink data, such as data responsive to the uplink data, may experience less latency on a downlink channel. This imbalance between uplink and downlink latencies, or changes in uplink latency, may cause lag in the gaming environment, or a less enjoyable gaming experience.

### SUMMARY

Systems, methods, and apparatuses are described for coordinating wireless communication. A first device, such as a user device, may perform a contention process by sending a request to send a message to a second device, in an attempt to gain access to a communication channel. The second device may send an approval to send a message to the first device, indicating the first device has permission to utilize the communication channel during a transmission opportunity window. The transmission opportunity window may be an extended transmission opportunity window, such that communications sent between the first and second devices are complete prior to expiration of the transmission opportunity window. The second device, upon completion of sending and receiving the communications, may initiate another contention process to gain access to the communication channel prior to the transmission opportunity window expiring. As other devices in the network wait for attempting to gain access to the communication channel until expiration of the transmission opportunity window, the second device has an increased likelihood for gaining access to the communication channel. This can reduce latency for the first and second device's communications in the network.

### BRIEF DESCRIPTION OF DRAWINGS

The accompanying drawings, which are incorporated in and constitute a part of this specification, show embodiments and together with the description, serve to explain the principles of the methods and systems:
FIG. 1 shows an example system;
FIG. 2 shows an example computing system;
FIG. 3 shows an example communication workflow;
FIG. 4 shows an example communication workflow;
FIG. 5 shows an example method;
FIG. 6 shows an example method;
FIG. 7 shows an example method; and
FIG. 8 shows an example method.

### DETAILED DESCRIPTION

Methods, devices, and systems are described for coordinating wireless data communications. A wireless communication network may include different devices capable of wireless communication, such as one or more stations (e.g., client devices), which may be disposed in relation to one or more network devices (e.g., wireless routers with wireless access points). In order for a device to gain access to a communication channel of the network (e.g., for the sending and/or receiving of wireless communications), the device may undergo a contention process for a channel. For example, the device may sense whether the channel, or associated frequencies, are in use by other devices in the network. If the device fails to sense other users on the channel, the device may send a request for access to the channel.

However, one issue with the use of these contention processes is latency associated with data transmissions by the devices. If more than one device in the network attempt to gain access to a channel at a particular time, or if a channel is already in use at a time when a device senses the channel, a delay may occur in a device sending or receiving communications over the network. This may increase latency experienced in the network.

According to the present disclosure, a transmission opportunity (TXOP) window for channel access granted to a first device may be extended, such that the communications sent from a first device and to a second device during the TXOP window are completed prior to expiration of the TXOP window. This may result in a reservation time occurring within the TXOP window, where the channel is free of communications. The second device may initiate another contention process during this reservation time, in an attempt to gain access to the channel. Other devices in the network may wait to begin contention processes for channel access until after expiration of the TXOP window. Thus, the second device initiating the contention process in the reservation time may have an increased likelihood of gaining access to the channel, as the second device may complete the contention process and request channel access prior to the other devices in the network. This may increase the chances the second device gains access to the channel, which may reduce latency for the second device communications.

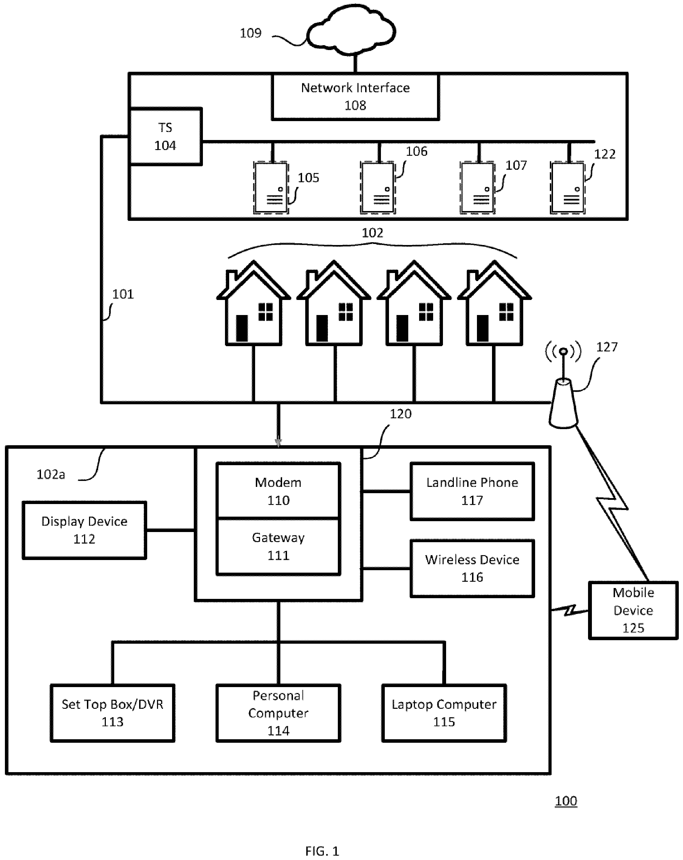

FIG. 1 shows an example communication network 100 in which features described herein may be implemented. The communication network 100 may be any type of information distribution network, such as satellite, telephone, cellular, wireless, etc. Examples may include an optical fiber network, a coaxial cable network, and/or a hybrid fiber/coax distribution network. The communication network 100 may use a series of interconnected communication links 101 (e.g., coaxial cables, optical fibers, wireless links, etc.) to connect multiple premises 102 (e.g., businesses, homes, consumer dwellings, train stations, airports, etc.) to a local office 103 (e.g., a headend). The local office 103 may transmit downstream information signals and receive upstream information signals via the communication links 101. Each of the premises 102 may have equipment, described below, to receive, send, and/or otherwise process those signals.

The communication links 101 may originate from the local office 103 and may be split to exchange information signals with the various premises 102. The communication links 101 may include components not shown, such as splitters, filters, amplifiers, etc. to help convey the signal clearly. The communication links 101 may be coupled to an access point 127 (e.g., a base station of a cellular network, a Wi-Fi access point, etc.) configured to provide wireless communication channels to communicate with one or more mobile devices 125. The mobile devices 125 may include cellular mobile devices, and the wireless communication channels may be Wi-Fi IEEE 802.11 channels, cellular channels (e.g., LTE), and/or satellite channels.

The local office 103 may include an interface 104, such as a termination system (TS). The interface 104 may be a cable modem termination system (CMTS), which may be a computing device configured to manage communications between devices on the network of the communication links 101 and backend devices such as servers 105-107 and 122. The interface 104 may be configured to place data on one or more downstream frequencies to be received by modems at the various premises 102, and to receive upstream communications from those modems on one or more upstream frequencies.

The local office 103 may also include one or more network interfaces 108 which may permit the local office 103 to communicate with various other external networks 109. The external networks 109 may include, for example, networks of Internet devices, telephone networks, cellular telephone networks, fiber optic networks, local wireless networks (e.g., WiMAX), satellite networks, a cloud network, and any other desired network, and the network interface 108 may include the corresponding circuitry needed to communicate on the external networks 109, and to other devices on the external networks. For example, the local office 103 may also or alternatively communicate with a cellular telephone network and its corresponding mobile devices 125 (e.g., cell phones, smartphone, tablets with cellular radios, laptops communicatively coupled to cellular radios, etc.) via the interface 108. Further, in some cases, any or all of the components of the local office 103 may be a part of a cloud network. For example, any of the servers of the local office 103 may be a cloud server or servers.

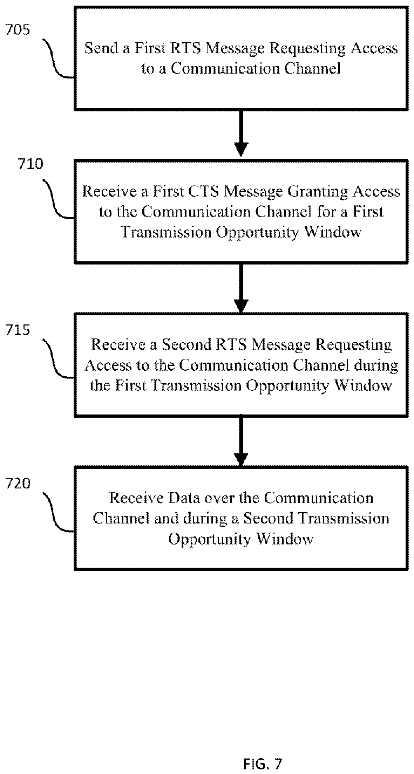

The push notification server 105 may generate push notifications to deliver data and/or commands to the various premises 102 in the network (or more specifically, to the devices in the premises 102 that are configured to detect such notifications). The content server 106 may be one or more computing devices that are configured to provide content to devices at premises. This content may be, for example, video on demand movies, television programs, songs, text listings, web pages, articles, news, images, files, etc. The content server 106 (or, alternatively, an authentication server) may include software to validate user identities and entitlements, to locate and retrieve requested content and to initiate delivery (e.g., streaming) of the content to the requesting user(s) and/or device(s). The application server 107 may be a computing device configured to offer any desired service, and may execute various languages and operating systems (e.g., servlets and JSP pages running on Tomcat/MySQL, OSX, BSD, Ubuntu, Redhat, HTMLS, JavaScript, AJAX and COMET). For example, an application server may be responsible for collecting television program listings information and generating a data download for electronic program listings. Another application server may be responsible for monitoring user viewing habits and collecting that information for use in selecting advertisements. Yet another application server may be responsible for formatting and inserting advertisements in a video stream being transmitted to the premises 102 (e.g., this application server may also be configured to perform some or all of the functions shown in FIG. 7 below). Another application server may be a gaming server configured to execute gaming programs. The local office 103 may include additional servers, including a controller server 122 (described below), additional push, content, and/or application servers, and/or other types of servers. Although shown separately, the push server 105, the content server 106, the application server 107, the controller server 122, and/or other server(s) may be combined. The servers 105, 106, 107, and 122, and/or other servers, may be computing devices and may include memory storing data and also storing computer executable instructions that, when executed by one or more processors, cause the server(s) to perform steps described herein.

An example premises 102 a may include an interface 120. The interface 120 may include any communication circuitry used to communicate via one or more of the links 101. The interface 120 may include a modem 110, which may include transmitters and receivers used to communicate via the links 101 with the local office 103. The modem 110 may be, for example, a coaxial cable modem (for coaxial cable lines of the communication links 101), a fiber interface node (for fiber optic lines of the communication links 101), twisted-pair telephone modem, cellular telephone transceiver, satellite transceiver, local Wi-Fi router or access point, or any other desired modem device. One modem is shown in FIG. 1, but a plurality of modems operating in parallel may be implemented within the interface 120. The interface 120 may include a gateway interface device 111. The modem 110 may be connected to, or be a part of, the gateway interface device 111. The gateway interface device 111 may be a computing device that communicates with the modem(s) 110 to allow one or more other devices in the premises 102 a, to communicate with the local office 103 and other devices beyond the local office 103. The gateway interface device 111 may comprise a set-top box (STB), digital video recorder (DVR), a digital transport adapter (DTA), computer server, network-capable "smart" TVs with embedded processors, and/or any other desired computing device. The gateway interface device 111 may also include local network interfaces to provide communication signals to requesting entities/devices in the premises 102 a, such as display devices 112 (e.g., televisions), additional STBs or DVRs 113, personal computers/laptop 114, network-capable "smart" TVs, 115, wireless devices 116 (e.g., wireless routers, wireless laptops, notebooks, tablets and netbooks, cordless phones (e.g., Digital Enhanced Cordless Telephone-DECT phones), mobile phones, mobile televisions, personal digital assistants (PDA), etc.), landline phones 117 (e.g., Voice over Internet Protocol-VoIP phones), wireless "smart" TVs, and any other desired devices. Examples of the local network interfaces include Multimedia Over Coax Alliance (MoCA) interfaces, Ethernet interfaces, universal serial bus (USB) interfaces, wireless interfaces (e.g., IEEE 802.11, IEEE 802.15), analog twisted pair interfaces, Bluetooth interfaces, and others.

One or more of the devices at a premises 102 a may be configured to provide wireless communications channels (e.g., IEEE 802.11 channels) to communicate with a mobile device 125. A modem 110 (e.g., access point) or a wireless device 116 (e.g., router, tablet, laptop, etc.) may wirelessly communicate with one or more mobile devices 125, which may be on- or off-premises.

Mobile devices 125 may communicate with a local office 103 including, for example, with the controller server 122. Mobile devices 125 may be cell phones, smartphones, tablets (e.g., with cellular transceivers), laptops (e.g., communicatively coupled to cellular transceivers), wearable devices (e.g., smart watches, electronic eye-glasses, etc.), or any other mobile computing devices. Mobile devices 125 may store, output, and/or otherwise use assets. An asset may be a video, a game, one or more images, software, audio, text, webpage(s), and/or other content. Mobile devices 125 may include Wi-Fi transceivers, cellular transceivers, satellite transceivers, and/or global positioning system (GPS) components.

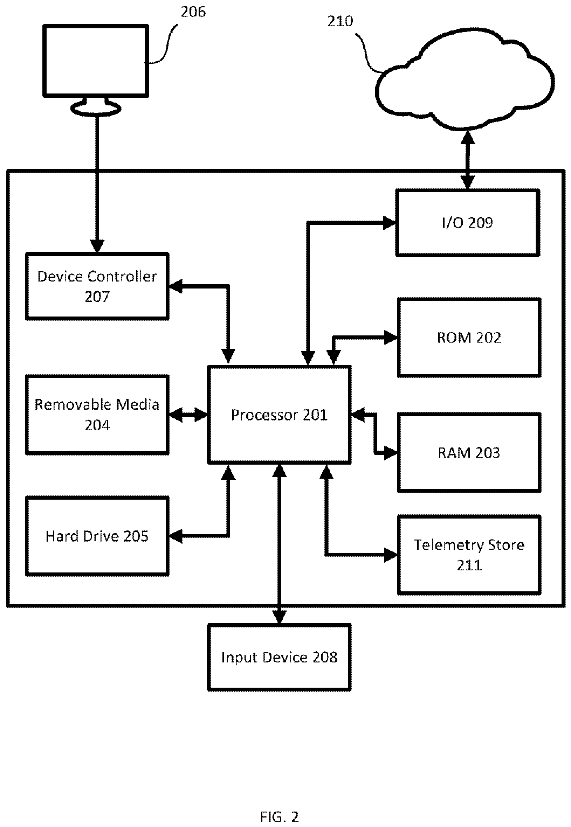

FIG. 2 shows hardware elements of a computing device that may be used to implement any of the computing devices discussed herein (e.g., the servers, devices, a controller server, end user device, receiving computing device, etc.). The computing device 200 may include one or more processors 201, which may execute instructions of a computer program to perform any of the functions described herein. The instructions may be stored in a read-only memory (ROM) 202, random access memory (RAM) 203, removable media 204 (e.g., a Universal Serial Bus (USB) drive, a compact disk (CD), a digital versatile disk (DVD)), and/or in any other type of computer-readable medium or memory. Instructions may also be stored in an attached (or internal) hard drive 205 or other types of storage media. The computing device 200 may include one or more output devices, such as a display 206 (e.g., an external television or other display device), and may include one or more output device controllers 207, such as a video processor. There may also be one or more user input devices 208, such as a remote control, keyboard, mouse, touch screen, microphone, etc. The computing device 200 may also include one or more network interfaces, such as a network input/output (I/O) circuit 209 (e.g., a network card) to communicate with an external network 210. The network input/output circuit 209 may be a wired interface, wireless interface, or a combination of the two. The network input/output circuit 209 may include a modem (e.g., a cable modem), and the external network 210 may include the communication links 101 discussed above, the external network 109, an in-home network, a network provider's wireless, coaxial, fiber, or hybrid fiber/coaxial distribution system (e.g., a DOCSIS network), or any other desired network. Additionally, the computing device 200 may include a location-detecting device, such as a global positioning system (GPS) microprocessor 211, which can be configured to receive and process global positioning signals and determine, with possible assistance from an external server and antenna, a geographic position of the computing device 200.

Although FIG. 2 shows an example hardware configuration, one or more of the elements of the computing device 200 may be implemented as software or a combination of hardware and software. Modifications may be made to add, remove, combine, divide, etc. components of the computing device 200. Additionally, the elements shown in FIG. 2 may be implemented using basic computing devices and components that have been configured to perform operations such as are described herein. For example, a memory of the computing device 200 may store computer-executable instructions that, when executed by the processor 201 and/or one or more other processors of the computing device 200, cause the computing device 200 to perform one, some, or all of the operations described herein. Such memory and processor(s) may also or alternatively be implemented through one or more Integrated Circuits (ICs). An IC may be, for example, a microprocessor that accesses programming instructions or other data stored in a ROM and/or hardwired into the IC. For example, an IC may comprise an Application Specific Integrated Circuit (ASIC) having gates and/or other logic dedicated to the calculations and other operations described herein.

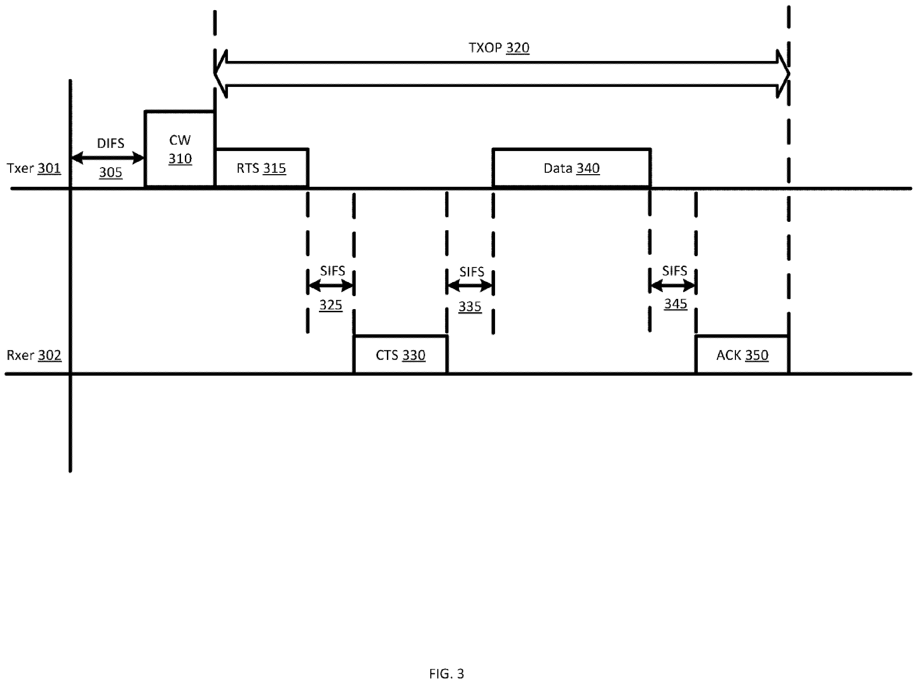

FIG. 3 shows an example communication workflow. The communications may be between a transmitter 301 and a receiver 302, which can be examples of devices shown in FIG. 1. For example, the transmitter 301 may be an example of a mobile device 125, and the receiver 302 may be an example of an access point 127.

The transmitter 301 and receiver 302 may communicate with each other, and other devices, over a wireless communication network. In some cases, the wireless network may require devices within the network perform a contention process to gain access to a communication channel of the wireless network. For example, the wireless network may operate under an IEEE 802.11 protocol. In some cases, the wireless network may operate with a contention process as an optional feature.

The transmitter 301 may initiate a contention process for access to a communication channel over the wireless network. For example, a contention process may include sensing a channel or channels to determine whether the channel or channels are in use. In some cases, this sensing process may be referred to as a listen before talk (LBT) process. The contention process may also include performing a request to send (RTS)/clear to send (CTS) process with the receiver 302. Thus, in some cases the contention process may include a LBT process and RTS/CTS process. Further, in some cases a contention process may include a wait period subsequent to a busy time of the channel. For example, the channel may be in use by another device, such as during a TXOP window. The contention process may begin at the expiration of the TXOP window. The device may wait for a period of time, such as a DCF Interframe Space (DIPS) prior to sensing the channel.

The transmitter 301 may initiate a contention process for gaining access to a channel of the wireless network. In some cases, the contention process may include waiting a period of time, such as a DIFS period 305, prior to sensing the channel. The DIFS time period may be defined by the protocol of the wireless network. In some cases, the DIFS time period may be informed by the network to the transmitter 301, such as by an access point of the wireless network. Examples of the DIFS time period can include 28 µs, 34 µs, 50 µs, 128 µs, and the like.

The transmitter 301 may sense the channel or channels for access during a contention window 310. In some cases, the channel sensing may occur subsequent to the DIFS period 305. In some cases, the contention window duration may be defined by the protocol of the wireless network. In some cases, the contention window duration may be informed by the network to the transmitter 301, such as by an access point of the wireless network. In some cases, the contention window duration may be based on a type of data the transmitter 301 is scheduled to transmit. For example, the type of data may include video, audio, best effort, background, and the like. Further, sensing the channel or channels may include monitoring the channel and determining whether a received power level exceeds a power threshold value.

The transmitter 301 may send a RTS message 315 to the receiver 302. The RTS message 315 may include identification information of the transmitter 301, identification information of the receiver 302, a transmission type associated with the communications the transmitter 301 intends to transmit (e.g., video), a duration required for transmitting the communications the transmitter 301 intends to transmit, and the like. In some cases, the RTS message 315 may be sent as a broadcast transmission.

The receiver 302 may send a CTS message 330 in response to the RTS message 315. The CTS message 330 may indicate to the transmitter 301 permission to send data over the communication channel. The CTS message 330 may also indicate a duration for which the transmitter 301 has permission to access the communication channel. In some cases, this duration may be a transmission opportunity (TXOP) window 320. In some cases, the TXOP window 320 may include time during which the RTS message 315 and CTS message 330 are sent. For example, the TXOP window 320 may be defined as beginning at the time the RTS message 315 is sent or received, and thus the TXOP window 320 may include the RTS message 315, the CTS message 330, and the short interframe spacing (SIFS) 320, which may be a time period between the receiver 302 receiving the RTS message 315, processing the RTS message 315, and responding to the transmitter 301. Further, in some cases, the CTS message 330 may be broadcasted to the transmitter 301, which may provide other devices in the network with an indication that the communication channel is unavailable for other communications by these other devices.

The transmitter 301 may transmit data 340 to the receiver 302 via the communication channel and within the TXOP window 320. The data 340 may correspond to the RTS message 315. For example, the scheduling or caching of the data 340 for transmission may prompt the transmitter 301 to send the RTS message 315. In some cases, the data 340 may be video data, audio data, or the like. In some cases, the data 340 may be a non-broadcast transmission, such that the transmission recipient is limited (e.g., to the receiver 302).

The receiver 302 may transmit an acknowledgement (ACK) 350 in response to the data 340. The ACK 350 may indicate to the transmitter 301 that the receiver 302 received the data 340. The ACK 340 may be transmitted within the TXOP window 320.

The TXOP window 320 may also include SIFS 325, 335, and 345. The SIFS may be time durations in which a device receives a communication, processes the communication, and responds to the communication. In some cases, the SIFS 325, 335, and 345 may be a uniform time duration. In some cases, the SIFS 325, 335, and 345 may be a standard time duration, such as a time duration defined by a standards the network is operating under. In some cases, the SIFS 325, 335, and 345 may include different time durations compared to one another. In some cases, any of the SIFS 325, 335, and 345 may be other time durations, such as a DIFS, a reduced interframe space (RIFS), and extended interframe space (EIFS), and the like.

The receiver 302 may determine the duration of the TXOP window 320. In some cases, the receiver 302 may determine the duration of the TXOP window 320 based on the RTS message 315. For example, the RTS message 315 may include a data type to be transmitted, a duration or data amount of the data to be transmitted, and the like. The receiver 302 may determine a duration of the TXOP window 320 based on this information.

However, typically, the TXOP window 320 may be determined such that no or little amount of time is remaining in the TXOP window 320 once the communications are completed. For example, the TXOP window 320 may expire upon sending or receiving the ACK 350. Thus, the communication channel is available to access by other devices in the network upon expiration of the TXOP window 320. If, for example, the receiver 302 has additional data scheduled or cached for transmission prior to expiration of the TXOP window 320, the receiver 302 may compete with other devices in the network for channel access upon the expiration of the TXOP window 320, which may increase the chances that the receiver 302 fails to gain access to the channel. This may pose problems in latency sensitive networks, such as gaming or AR/VR networks.

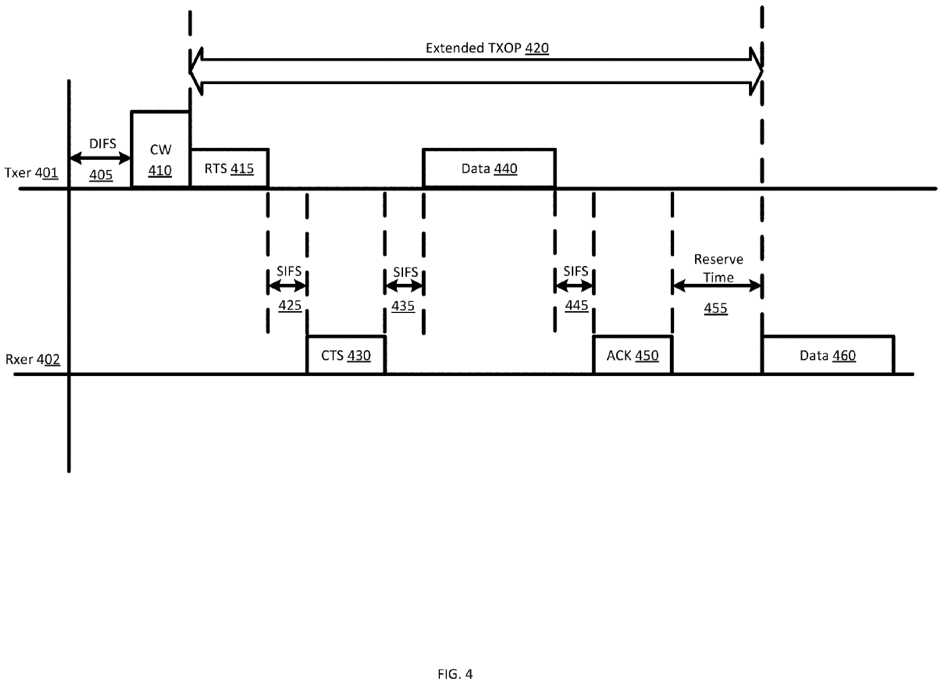

FIG. 4 shows an example communication workflow. The communications may be between a transmitter 401 and a receiver 402, which can be examples of devices shown in FIG. 1. For example, the transmitter 401 may be an example of a mobile device 125, and the receiver 402 may be an example of an access point 127. In some cases, the receiver 402 may be an example of a gaming device, such as a gaming controller or gaming platform, or an AR/VR device, such as an AR/VR headset or AR/VR platform.

The transmitter 401 and receiver 402 may communicate with each other, and other devices, over a wireless communication network. In some cases, the wireless network may require devices within the network perform a contention process to gain access to a communication channel of the wireless network. For example, the wireless network may operate under an IEEE 802.11 protocol. In some cases, the wireless network may operate with a contention process as an optional feature.

The transmitter 401 may initiate a contention process for access to a communication channel over the wireless network. For example, a contention process may include sensing a channel or channels to determine whether the channel or channels are in use. In some cases, this sensing process may be referred to as a LBT process. The contention process may also include performing a RTS/CTS process with the receiver 302. Thus, in some cases the contention process may include a LBT process and RTS/CTS process. Further, in some cases a contention process may include a wait period subsequent to a busy time of the channel. For example, the channel may be in use by another device, such as during a TXOP window. The contention process may begin at the expiration of the TXOP window. The device may wait for a period of time, such as a DIFS, prior to sensing the channel.

The transmitter 401 may initiate a contention process for gaining access to a channel of the wireless network. In some cases, the contention process may include waiting a period of time, such as a DIFS period 405, prior to sensing the channel. The DIFS time period may be defined by the protocol of the wireless network. In some cases, the DIFS time period may be informed by the network to the transmitter 401, such as by an access point of the wireless network. Examples of the DIFS time period can include 28 µs, 34 µs, 50 µs, 128 µs, and the like.

The transmitter 401 may sense the channel or channels for access during a contention window 410. In some cases, the channel sensing may occur subsequent to the DIFS period 405. In some cases, the contention window duration may be defined by the protocol of the wireless network. In some cases, the contention window duration may be informed by the network to the transmitter 401, such as by an access point of the wireless network. In some cases, the contention window duration may be based on a type of data the transmitter 401 is scheduled to transmit. For example, the type of data may include video, audio, best effort, background, and the like. Further, sensing the channel or channels may include monitoring the channel and determining whether a received power level exceeds a power threshold value.

The transmitter 401 may send a RTS message 415 to the receiver 402. The RTS message 415 may include identification information of the transmitter 401, identification information of the receiver 402, a transmission type associated with the communications the transmitter 401 intends to transmit (e.g., video), a duration required for transmitting the communications the transmitter 401 intends to transmit, and the like. In some cases, the RTS message 415 may be sent as a broadcast transmission.

In some cases, the receiver 402 may determine an amount of time required for communications corresponding to the RTS message 415 to be communicated between the transmitter 401 and the receiver 402. For example, the RTS message 415 may include information of a requested duration for data scheduled or cached by the transmitter 401 for communication with the receiver 402. In some cases, the RTS message 415 may include information of a data size for data scheduled or cached by the transmitter 401 for communication with the receiver 402. In some cases, the RTS message 415 may include information of a data type (e.g., video) for data scheduled or cached by the transmitter 401 for communication with the receiver 402.

Based on the information of the RTS message 415, the receiver 402 may determine a duration of a transmission opportunity window. In some cases, the receiver 402 may determine the duration further based on other communications corresponding to the RTS message 415. For example, the duration may be determined further based on a duration of the RTS message 415, a duration of a CTS message 430, a duration of an ACK message 450, durations of SIFs 425, 435, and 445 between communications, and the like.

In some cases, the transmission opportunity window may be determined prior to receiving the RTS message 415, such as when the transmission opportunity window is standardized based on a characteristic of the data scheduled or cached for transmission (e.g., data type, data size, and the like). In these cases, the receiver 402, or other device in the network, may broadcast the transmission opportunity window duration, such as in a beacon frame (e.g., dot11TXOPDurationRTSThreshold = 129).

The transmission opportunity window duration may include a reserve time 455. The reserve time 455 may be additional time in the transmission opportunity window duration, such that communications corresponding to the RTS message 415 are completed prior to the reserve time 455. The reserve time 455 may be used by the receiver 402 for initiating a contention process while the transmission opportunity window is ongoing (e.g., while other devices in the network are waiting for the transmission opportunity window to expire).

The receiver 402 may send a CTS message 430 in response to the RTS message 415. The CTS message 430 may indicate to the transmitter 401 permission to send data over the communication channel. The CTS message 430 may also indicate a duration for which the transmitter 401 has permission to access the communication channel. In some cases, this duration may be a TXOP window 420. In some cases, the TXOP window 420 may include time during which the RTS message 415 and CTS message 430 are sent. For example, the TXOP window 420 may be defined as beginning at the time the RTS message 415 is sent or received, and thus the TXOP window 420 may include the RTS message 415, the CTS message 430, and the SIFS 420, which may be a time period between the receiver 402 receives the RTS message 415, process the RTS message 415, and responds to the transmitter 401. Further, in some cases, the CTS message 430 may be broadcasted to the transmitter 401, which may provide other devices in the network with an indication that the communication channel is unavailable for other communications by these other devices.

The transmitter 401 may transmit data 440 to the receiver 402 via the communication channel and within the TXOP window 420. The data 440 may correspond to the RTS message 415. For example, the scheduling or caching of the data 440 for transmission may prompt the transmitter 401 to send the RTS message 415. In some cases, the data 440 may be video data, audio data, or the like. In some cases, the data 440 may be a non-broadcast transmission, such that the transmission recipient is limited (e.g., to the receiver 402).

The receiver 402 may transmit an ACK 450 in response to the data 440. The ACK 450 may indicate to the transmitter 401 that the receiver 402 received the data 440. The ACK 450 may be transmitted within the TXOP window 420.

The TXOP window 420 may also include SIFS 425, 435, and 445. The SIFS may be time durations in which a device receives a communication, processes the communication, and responds to the communication. In some cases, the SIFS 425, 435, and 445 may be a uniform time duration. In some cases, the SIFS 425, 435, and 445 may be a standard time duration, such as a time duration defined by a standards the network is operating under. In some cases, the SIFS 425, 435, and 445 may include different time durations compared to one another. In some cases, any of the SIFS 425, 435, and 445 may be other time durations, such as a DIFS, a RIFS, an EIFS, and the like.

In some cases, the receiver 402 may initiate another contention process for gaining to access to the communication channel during the reserve time 455. For example, the receiver 402 may schedule or cache additional data for sending to the transmitter 401. In some cases, the initiation of the other contention process may be based on transmitting the ACK 450 (e.g., indicating successful receipt of the data 440). In some cases, part or all of the other contention process may be performed in the reserve time 455. For example, a sensing process may be performed within the reserve time 455, where the receiver 402 determines whether other devices are communicating over the communication channel. In some cases, the receiver 402 may send a second RTS message during the reserve time 455. The second RTS message may request access to the communication channel for transmitting the additional data, and may include information of characteristics of the additional data (e.g., data size, data type, transmitting identity, destination identity, and the like). In some cases, the receiver 402 may receive from the transmitter 401 a second CTS message granting access to the communication channel (e.g., during a second transmission opportunity window). The receiver 402 may transmit the additional data 460 to the transmitter 401 over the communication channel.

Notably, the other devices in the network may receive information corresponding to the TXOP window 420 duration. For example, the CTS message 430 may be broadcast through the network, which may include information corresponding to the TXOP window 420 duration. The CTS message 430 may be an indicator to other devices in the network to refrain from communicating over the channel, or from conducting a contention process for accessing the communication channel, until expiration of the TXOP window 420. For example, when these other devices receive the broadcasted CTS message 430, these other devices may set their respective network allocation vector (NAV) timers to correspond with the expiration of the TXOP window 420. Thus, these other devices refrain from attempting to access the communication channel until the TXOP window 420 expires. In comparison, the receiver 402 may initiate the other contention process within the reserve time 455 of the TXOP window 420, which provides the receiver 402 a greater likelihood of winning channel access.

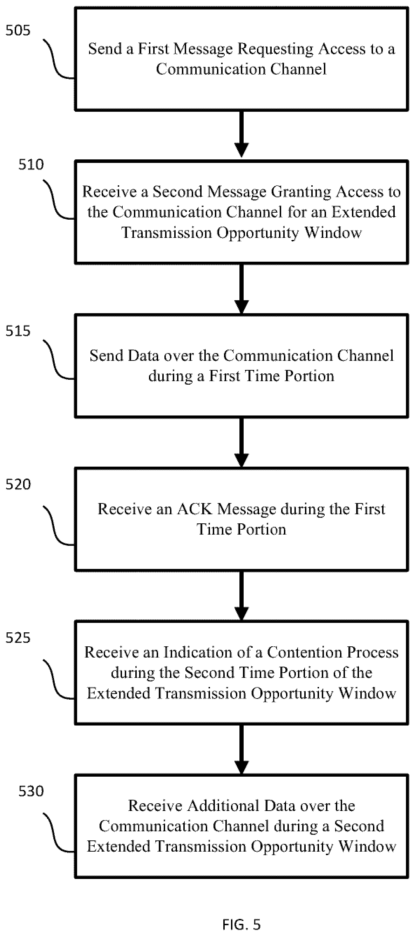

FIG. 5 shows an example method. At Step 505, a first device of a wireless network may send a first message requesting access to a communication channel of the wireless network. In some cases, the first device may schedule or cache data for transmission to the second device, where the sending of the first message is based on the scheduling or caching. In some cases, the first message may include a RTS message. In some cases, the first device may include a gaming device or an AR/VR device. In some cases, the first device may include a wireless station, and the second device may include an access point.

At Step 510, the first device may receive from the second device a second message granting permission to access the communication channel for an extended transmission opportunity window. The extended transmission opportunity window may include a first time portion configured for communications corresponding to the first message, and a second time portion configured as a remaining time portion upon completion of the communications. In some cases, the communications corresponding to the first message may include the first message, the second message, transmissions of data scheduled or cached for transmitting to the second device, ACK messages from the second device indicating receipt of the data transmissions, and the like. In some cases, the remaining time portion may include a reserved time. In some cases, the second message may include a CTS message. In some cases, the first message, the second message, or both, may be broadcast messages.

At Step 515, the first device may send data during the first time portion of the extended transmission opportunity window. In some cases, the data may be video data. In some cases, the data may be scheduled or cached for transmitting to the second device, where sending the first message may be based on the scheduling or caching.

At Step 520, the first device may receive from the second device an ACK message during the first time portion. The ACK message may indicate receipt of the data transmissions from the first device. At Step 525, the second device may initiate a contention process during the remaining time portion to gain access to the communication channel. In some cases, the contention process may include a sensing process, where the second device determines whether other devices of the wireless network may be communicating over the communication channel. In some cases the contention process may include sending a third message to the first device to request access to the communication channel. In some cases, the third message may include another RTS message. In some cases, the contention process may include receiving from the first device and by the second device another CTS message granting permission to access the communication channel. At Step 530, the second device may send additional data to the first device over the communication channel and during a second extended transmission opportunity window.

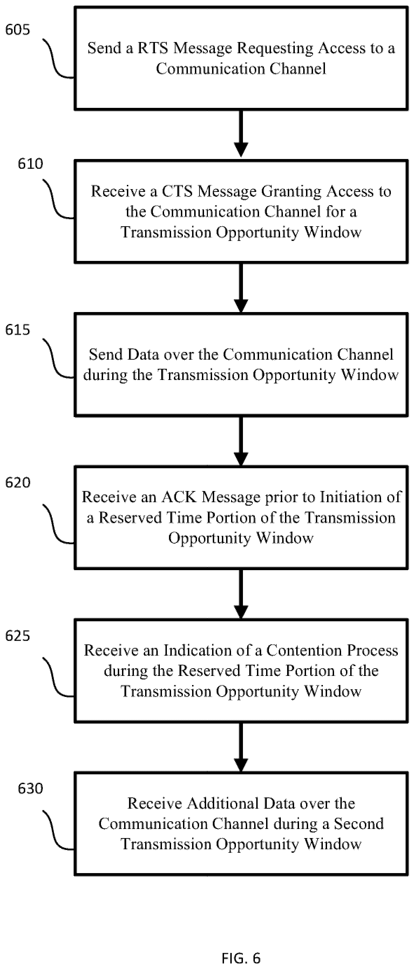

FIG. 6 shows an example method. At Step 605, a first device of a wireless network may send a RTS message requesting access to a communication channel of the wireless network. In some cases, the first device may schedule or cache data for transmission to the second device, where the sending of the first message is based on the scheduling or caching. In some cases, the first device may include a gaming device or an AR/VR device. In some cases, the first device may include a wireless station, and the second device may include an access point.

At Step 610, the first device may receive from the second device a CTS message granting permission to access the communication channel for a transmission opportunity window. In some cases, the transmission opportunity window may be an extended transmission opportunity window. The transmission opportunity window may include a first time portion configured for communications corresponding to the first message, and a second time portion configured as a remaining time portion upon completion of the communications. In some cases, the communications corresponding to the first message may include the first message, the second message, transmissions of data scheduled or cached for transmitting to the second device, ACK messages from the second device indicating receipt of the data transmissions, and the like. In some cases, the remaining time portion may include a reserved time. In some cases, the RTS message, the CTS message, or both, may be broadcast messages.

At Step 615, the first device may send data during the transmission opportunity window. In some cases, the data may be video data. In some cases, the data may be scheduled or cached for transmitting to the second device, where sending the first message may be based on the scheduling or caching.

At Step 620, the first device may receive from the second device an ACK message during the transmission opportunity window. The ACK message may indicate receipt of the data transmissions from the first device. The ACK message may be received prior to initiation of a reserved time portion remaining within the transmission opportunity window. At Step 625, the second device may initiate a contention process during the reserved time portion to gain access to the communication channel. In some cases, the contention process may include a sensing process, where the second device determines whether other devices of the wireless network may be communicating over the communication channel. In some cases the contention process may include sending by the second device, a second RTS message to the first device to request access to the communication channel. In some cases, the contention process may include receiving from the first device and by the second device a second CTS message granting permission to access the communication channel. At Step 630, the second device may send additional data to the first device over the communication channel and during a second transmission opportunity window.

FIG. 7 shows an example method. At Step 705, a first device of a wireless network may send a first RTS message requesting access to a communication channel of the wireless network. In some cases, the first device may schedule or cache data for transmission to the second device, where the sending of the first message is based on the scheduling or caching. In some cases, the first device may include a gaming device or an AR/VR device. In some cases, the first device may include a wireless station, and the second device may include an access point.

At Step 710, the first device may receive from the second device a first CTS message granting permission to access the communication channel for a first transmission opportunity window. In some cases, the first transmission opportunity window may be an extended transmission opportunity window. The first transmission opportunity window may include a first time portion configured for communications corresponding to the first message, and a second time portion configured as a remaining time portion upon completion of the communications. In some cases, the communications corresponding to the first message may include the first message, the second message, transmissions of data scheduled or cached for transmitting to the second device, ACK messages from the second device indicating receipt of the data transmissions, and the like. In some cases, the remaining time portion may include a reserved time. In some cases, the RTS message, the CTS message, or both, may be broadcast messages.

At Step 715, the second device may send a second RTS message during the first transmission opportunity window to gain access to the communication channel upon expiration of the first transmission opportunity window. In some cases, the second device may initiate a contention process during the first transmission opportunity window to gain access to the communication channel. In some cases, the contention process may include a sensing process, where the second device determines whether other devices of the wireless network may be communicating over the communication channel. In some cases, the contention process may include receiving from the first device and by the second device a second CTS message granting permission to access the communication channel. At Step 720, the second device may send additional data to the first device over the communication channel and during a second transmission opportunity window.

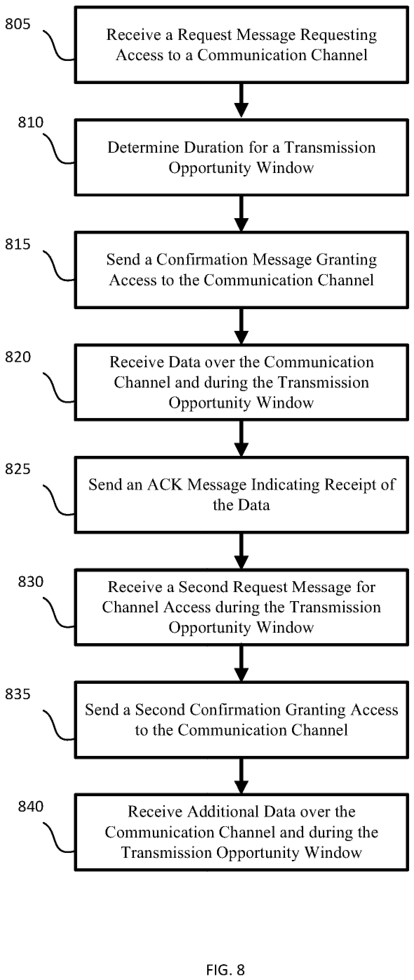

FIG. 8 shows an example method. At Step 805, a second device of a wireless network may receive from a first device of the wireless network a request to access a communication channel of the wireless network. In some cases, the first device may schedule or cache data for transmission to the second device, where the sending of the request is based on the scheduling or caching. In some cases, the request may include a RTS message. In some cases, the first device may include a gaming device or an AR/VR device. In some cases, the first device may include a wireless station, and the second device may include an access point.

At Step 810, the second device may determine a duration of a transmission opportunity window. The transmission opportunity window may be for access to the communication channel by the first device. In some cases, determining the duration of the transmission opportunity window may include determining an amount of time required for communications corresponding to the request message. For example, the request message may include information of a requested duration for data scheduled or cached by the first device for communication with the second device. In some cases, the request message may include information of a data size for data scheduled or cached by the first device for communication with the second device. In some cases, the request message may include information of a data type (e.g., video) for data scheduled or cached by the first device for communication with the second device.

In some cases, the duration may be determined based on other communications corresponding to the request. For example, the duration may be determined further based on a duration of the request, a duration of a confirmation message granting access to the communication channel, a duration of an ACK message indicating receipt of data sent over the communication channel, durations of SIFs between communications, and the like.

In some cases, the duration of the transmission opportunity window may further include adding a reserve time to the amount of time required for communications corresponding to the request message. The reserve time may be additional time in the transmission opportunity window duration, such that communications corresponding to the request message are completed prior to the reserve time. The reserve time may be used by the first device for initiating a contention process while the transmission opportunity window is ongoing.

At Step 815, the second device may send to the fist device a confirmation message granting permission to access the communication channel for a transmission opportunity window. In some cases, the transmission opportunity window may be an extended transmission opportunity window. The transmission opportunity window may include a first time portion configured for communications corresponding to the request message, and a second time portion configured as a reserve time portion upon completion of the communications. In some cases, the communications corresponding to the request message may include the request message, the confirmation message, transmissions of data scheduled or cached for transmitting to the second device, ACK messages from the second device indicating receipt of the data transmissions, and the like.

At Step 820, the second device may receive from the first device data during the transmission opportunity window. In some cases, the data may be video data. In some cases, the data may be scheduled or cached for transmitting to the second device, where sending the request message may be based on the scheduling or caching.

At Step 825, the second device may send to the first device an ACK message during the transmission opportunity window. The ACK message may indicate receipt of the data transmissions from the first device. The ACK message may be sent prior to initiation of a reserved time portion remaining within the transmission opportunity window.

At Step 830, the second device may send to the first device a second request message for accessing the communication channel. The second request message may be sent during the transmission opportunity window. The first device may determine a duration of a second transmission opportunity window, which may repeat the process of Step 810.

At Step 835, the second device may receive from the first device a second confirmation message granting access to the communication channel during a second transmission opportunity window. The second confirmation message may be sent during the transmission opportunity window.

At Step 840, the second device may send additional data to the first device during the second transmission opportunity window.

Any of the disclosed methods may be performed by computer readable instructions embodied on computer readable media. Computer readable media may be any available media that may be accessed by a computer. By way of example and not meant to be limiting, computer readable media may comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of' and is not intended to convey an indication of a preferred or ideal embodiment. "Such as" is not used in a restrictive sense, but for explanatory purposes.

Disclosed are components that may be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that may be performed it is understood that each of these additional steps may be performed with any specific embodiment or combination of embodiments of the disclosed methods.

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Here follows a list of clauses highlighting various aspects of the disclosure.
Clause 1: A method comprising:
   sending, by a first device and to a second device, a first message requesting access to a communication channel;
   receiving, by the first device and from the second device, a second message granting permission to access the communication channel for an extended transmission opportunity window comprising:
      a first time portion configured for communications corresponding to the first message, and
      a second time portion configured for communications during a remaining time portion upon completion of the communications corresponding to the first message; and
   receiving, by the first device and from the second device via the communication channel, data during the first time portion of the extended transmission opportunity window.
Clause 2: The method of any preceding clause, wherein the first message comprises a request to send (RTS) message, and the second message comprises a clear to send (CTS) message.
Clause 3: The method of any preceding clause, further comprising:
   sending, by the first device and to the second device, during the remaining time portion, a third message requesting access to the communication channel upon expiration of the extended transmission opportunity window.
Clause 4: The method of any preceding clause, further comprising:
   receiving, by the first device and from the second device, during the first time portion an acknowledgement (ACK) message indicating receipt of the data by the second device.
Clause 5: The method of any preceding clause, wherein the first message is a broadcast message.
Clause 6: The method of any preceding clause, wherein the second message is a broadcast message.
Clause 7: The method of any preceding clause, wherein the first device comprises a wireless station, and the second device comprises an access point.
Clause 8: The method of any preceding clause, wherein the first device comprises at least one of a gaming device or an augmented reality/virtual reality (AR/VR) device.
Clause 9: A method comprising:
   sending, by a first device and to a second device, a request to send (RTS) message requesting access to a communication channel;
   receiving, by the first device and from the second device, a clear to send (CTS) message granting access to the communication channel for a transmission opportunity window;
   sending, by the first device and to the second device, data during the transmission opportunity window, and
   receiving, by the first device and from the second device, an acknowledgement (ACK) message indicating receipt of the data, wherein the ACK message is received prior to initiation of a reserved time portion remaining within the transmission opportunity window.
Clause 10: The method of any preceding clause, e.g. clause 9, further comprising:
   receiving, by the first device and from the second device, during the reserved time portion of the transmission opportunity window, a second RTS message requesting access to the communication channel.
Clause 11: The method of any preceding clause, e.g. clause 9 or 10, further comprising:
   sending, by the first device and to the second device, during the reserved time portion of the transmission opportunity window, a second CTS message granting access to the communication channel for a second transmission opportunity window and upon expiration of the transmission opportunity window.
Clause 12: The method of any preceding clause, e.g. clause 11, further comprising:
   receiving, by the first device and from the second device, second data during the second transmission opportunity window.
Clause 13: The method of any preceding clause, e.g. any of clauses 9 - 12, wherein the first device comprises a wireless station, and the second device comprises an access point.
Clause 14: The method of any preceding clause, e.g. any of clauses 9 - 13, wherein the second device initiates a contention process during the reserved time portion remaining within the transmission opportunity window.
Clause 15: The method of any preceding clause, e.g. any of clauses 9 - 14, wherein the first device comprises at least one of a gaming device or an augmented reality/virtual reality (AR/VR) device.
Clause 16: A method comprising:
   sending, by a first device and to a second device, a first request to send (RTS) message requesting access to a communication channel;
   receiving, by the first device and from the second device, a first clear to send (CTS) message granting access to the communication channel for a first transmission opportunity window; and
   receiving, by the first device and from the second device, a second RTS message during the first transmission opportunity window to gain access to the communication channel upon expiration of the first transmission opportunity window.
Clause 17: The method of any preceding clause, e.g. clause 16, further comprising:
   sending, by the first device and to the second device, a second CTS message granting access to the communication channel for a second transmission opportunity window.
Clause 18: The method of any preceding clause, e.g. clause 17, wherein the second CTS message is received during the first transmission opportunity window.
Clause 19: The method of any preceding clause, e.g. clause 17 or 18, further comprising:
   receiving, by the first device via the communication channel and from the second device, data during the first transmission opportunity window and the second transmission opportunity window.
Clause 20: The method of any preceding clause, e.g. any of clauses 16 - 19, wherein the first device comprises a wireless station, and the second device comprises an access point.
Clause 21: A non-transitory computer-readable medium storing instructions that, when executed by one or more processors, cause one or more devices to perform the method according to any of the preceding clauses.
Clause 22: A system, method, or apparatus for reserving channel access for wireless communications. A first device of a wireless network may request, and be granted access to, a communication channel of the wireless network during a transmission opportunity window. The transmission opportunity window may be larger in time than what is necessary for completing communications between the first device and the second device. Upon completion of the communications, the first device may receive a request to access the communication channel while the transmission opportunity window is still ongoing. Other devices in the wireless network may refrain from requesting access to the communication channel until expiration of the transmission opportunity window, which may increase the likelihood the second device gains access to the communication channel.

It will be apparent to those skilled in the art that various modifications and variations may be made without departing from the scope. Other embodiments will be apparent to those skilled in the art from consideration of the specification and practice disclosed herein. It is intended that the specification and examples be considered as exemplary only, with a scope being indicated by the following claims.

## Claims

1. A method comprising:
sending, by a first device and to a second device, a first message requesting access to a communication channel;
receiving, by the first device and from the second device, a second message granting permission to access the communication channel for an extended transmission opportunity window comprising:
a first time portion configured for communications corresponding to the first message, and
a second time portion configured for communications during a remaining time portion upon completion of the communications corresponding to the first message; and
receiving, by the first device and from the second device via the communication channel, data during the first time portion of the extended transmission opportunity window.

2. The method of claim 1, wherein the first message comprises a request to send (RTS) message, and the second message comprises a clear to send (CTS) message.

3. The method of any of the preceding claims, further comprising:
receiving, by the first device and from the second device, during the first time portion an acknowledgement (ACK) message indicating receipt of the data by the second device.

4. The method of any of the preceding claims, wherein the first message is a broadcast message.

5. The method of any of the preceding claims, wherein the second message is a broadcast message.

6. The method of any of the preceding claims, wherein the first device comprises a wireless station, and the second device comprises an access point.

7. The method of any of the preceding claims, wherein the first device comprises at least one of a gaming device or an augmented reality/virtual reality (AR/VR) device.

8. The method of any of the preceding claims, wherein the second device initiates a contention process during the second time portion of the extended transmission opportunity window.

9. The method of any of the preceding claims, further comprising receiving, by the first device and from the second device, second data during the second time portion of the extended transmission opportunity window.

10. The method of any of the preceding claims, further comprising:
receiving, by the first device and to the second device, during the remaining time portion, a third message requesting access to the communication channel upon expiration of the extended transmission opportunity window.

11. The method of the preceding claim, further comprising:
sending, by the first device and to the second device, and during the remaining time portion, a fourth message granting permission to access the communication channel for a second transmission opportunity window.

12. The method of the preceding claim, wherein the third message and the fourth message comprise broadcast messages.

13. A device comprising:
one or more processors; and
memory storing instructions that, when executed by the one or more processors, cause the device to perform the method of any of claims 1-12.

14. A computer-readable storage medium storing computer-readable instructions that, when executed by a processor, cause the processor to perform the method of any one of claims 1-12.

15. A system comprising:
a first computing device and a second computing device configured to perform the method of any one of claims 1-12.
